(19) Europäisches Patentamt
European Patent Office
Office européen des brevets

(11) **EP 2 381 231 A1**

(12) **EUROPEAN PATENT APPLICATION**
published in accordance with Art. 153(4) EPC

(43) Date of publication:
26.10.2011 Bulletin 2011/43

(51) Int Cl.:
*G01K 7/00* (2006.01)   *G01K 3/14* (2006.01)

(21) Application number: 09838347.4

(22) Date of filing: 29.09.2009

(86) International application number:
PCT/JP2009/066945

(87) International publication number:
WO 2010/082380 (22.07.2010 Gazette 2010/29)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 16.01.2009  CN 200910000465

(71) Applicants:
• Mitsubishi Heavy Industries, Ltd.
Tokyo 108-8215 (JP)
• Tsinghua University
Haidian District
Beijing 100084 (CN)

(72) Inventors:
• JIANG Peixue
Beijing 100084 (CN)
• ZHANG Youwei
Beijing 100084 (CN)
• LI Hui
Beijing 100084 (CN)

(74) Representative: Wiedemann, Peter
Hoffmann - Eitle
Patent- und Rechtsanwälte
Arabellastraße 4
81925 München (DE)

(54) **METHOD FOR CALCULATING INNER WALL TEMPERATURE FROM OUTER WALL TEMPERATURE OF TUBE**

(57)   The present invention relates to the field of measurement technology, and offers a method for calculating an inner wall temperature from a measurement result of an outer wall temperature of a tube in relation to a problem of a two-dimensional, unsteady heat flow in tube. The evaluation method includes the steps of measuring outer wall temperatures at a plurality of points under a two-dimensional unsteady flow in the tube; and estimating inner wall temperatures on the basis of the measured values of the outer-wall temperatures. The approach of the present invention makes it possible to correctly estimate change over time of the inner wall temperature of the tube from the outer wall temperature of the tube with high accuracy, and requires a relatively short calculation time. For these reasons, the present invention is applicable to the problem in that the inner wall temperature of a tube is difficult to measure, in relation to flow in the tube in the industrial production and the scientific research. Therefore, the present invention has a wide range of possible applications.

*Fig. 1*

**Description**

TECHNICAL FIELD

The present invention relates to the field of measurement technology, and more particularly relates to a measurement of a temperature under a two-dimensional unsteady flow in piping.

BACKGROUND ART

In the industrial production and the scientific research operations, it is often necessary to know a time variation of a temperature of a tube wall in relation to a heat flow problem in piping. Such a case includes, for example, the case of studying an influence of a thermal stress on the material structure of a tube wall in a thermodynamic piping. An outer wall temperature of a tube can be measured by a large number of improved experimental methods. However, in terms of an inner wall temperature of a tube, it is very difficult to attach a temperature measuring device for an inner wall of a tube, and an inappropriate attachment of the temperature measuring device causes disturbance in the thermal flow field in the tube, thus resulting in a measured value of the inner wall temperature of the tube far different from an actual value. For this reason, if it is possible to obtain an inner wall temperature of a tube through calculation by a certain method on the basis of an outer wall temperature of the tube, which is easily measured, that is, if it is possible to find a solution to the inverse heat conduction problem, the obstruction and difficulty can be avoided, which would otherwise be brought about by the measurement of inner wall temperatures of tubes in the production and scientific research. Currently, domestic and foreign scientific researchers have already been studying the inverse heat conduction problem in a wide variety of fields, and thus, a number of methods have been developed, including the maximum entropy method, the conjugate gradient method, the Green's function method, and the neural network method. Regarding one-dimensional, steady and unsteady problems, the solution of an inner wall temperature of a tube has been able to be found from an outer wall temperature of the tube by using an already-established method. Regarding a problem of a two-dimensional, steady flow in a tube as well, there is an established method for solving the inverse problem for finding a solution of an inner wall temperature of a tube from an outer wall temperature of the tube. On the contrary, regarding a problem of a two-dimensional, unsteady heat flow in a tube, it is relatively complicated to find a solution of the inverse heat conduction problem because of variations with time and space of an inner wall temperature of a tube and an outer wall temperature of the tube, and the number of related studies is also small. At present, as to the two-dimensional unsteady problem, there is no method for solving the inverse heat conduction problem for finding an inner wall temperature of a tube from an outer wall temperature of the tube.

PRIOR ART DOCUMENT

PATENT DOCUMENT

Patent Document 1: Japanese Patent Application Publication No. 2004-251843

SUMMARY OF THE INVENTION

PROBLEM TO BE SOLVED BY THE INVENTION

Therefore, an object of the present invention is to provide a method for calculating an inner wall temperature of a tube in the problem of flow in tube in relation to the above-described deficiencies existing in the conventional technologies. The method includes a step of finding a function of time variations of temperatures at a certain number of points on an inner wall of a tube through calculation on a basis of a function of time variations of temperatures at a certain number of points on an outer wall of the tube that are experimentally measured.

MEANS FOR SOLVING THE PROBLEM

In order to achieve the above-described object, the present invention employs technical ideas described below.
Specifically, a method for calculating an inner wall temperature from an outer wall temperature of a tube of a first invention is characterized by comprising the steps of: obtaining outer-wall-temperature measured values respectively at a plurality of points under a two-dimensional unsteady flow in the tube; and obtaining inner-wall-temperature resultant values at a plurality of points on a basis of the outer-wall-temperature measured values.

In addition, a method for calculating an inner wall temperature from an outer wall temperature of a tube of a second invention is characterized in that, in the method of the first invention, the step of obtaining inner-wall-temperature resultant values at a plurality of points on a basis of the outer-wall-temperature measured values at a plurality of points includes the steps of: setting an inner-wall-temperature initial value; obtaining outer-wall-temperature calculated values at the plurality of points through calculation on a basis of the inner-wall-temperature initial value; and judging whether or not each of the outer-wall-temperature calculated values and a corresponding one of the outer-wall-temperature measured values coincide with each other, and setting the inner-wall-temperature initial value as the inner-wall-temperature resultant value when the values coincide with each other while obtaining the resultant value by repeating calculation when the values do not coincide with each other.

Additionally, a method for calculating an inner wall temperature from an outer wall temperature of a tube of a third invention is characterized in that, in the method of the first invention, the plurality of points on the outer wall and the inner wall for evaluation are obtained by a meshing method.

Moreover, a method for calculating an inner wall temperature from an outer wall temperature of a tube of a fourth invention is characterized in that, in the method of the second invention, the outer-wall-temperature calculated values at the plurality of points are obtained by finding a solution of a two-dimensional unsteady heat conduction equation for the tube.

Further, a method for calculating an inner wall temperature from an outer wall temperature of a tube of a fifth invention is characterized in that, in the method of the second invention, the step of judging whether or not each of the outer-wall-temperature calculated values and a corresponding one of the outer-wall-temperature measured values coincide with each other includes the steps of: obtaining a present objective function value on a basis of each of the outer-wall-temperature calculated values and a corresponding one of the outer-wall-temperature measured values; and judging whether or not the present objective function value is smaller than a predetermined threshold value, and judging that the values coincide with each other when the present objective function value is smaller than the predetermined threshold value, but judging that the values do not coincide with each other when the present objective function value is not smaller than the predetermined threshold value.

Furthermore, a method for calculating an inner wall temperature from an outer wall temperature of a tube of a sixth invention is characterized in that, in the method of the fifth invention, the objective function is

[Formula 1]

$$J = \frac{1}{2} \sum_{m=1}^{M} \sum_{n=1}^{N} [T_{Cal,m,n} - T_{Exp,m,n}]^2 \ ,$$

where $T_{cal,m,n}$ represents the outer-wall-temperature calculated value, $T_{Exp,m,n}$ represents the outer-wall-temperature measured value, and M and N represent the number of measurement points and the number of time points, respectively.

Besides, a method for calculating an inner wall temperature from an outer wall temperature of a tube of a seventh invention is characterized in that, in the method of the second invention, the method further comprises a step of obtaining the inner-wall-temperature initial value for a next stage of repetition by an iterative equation before the step of obtaining a resultant value by repeating calculation, and the iterative equation is

[Formula 2]

$$T_{k,n}^{b+1} = T_{k,n}^{b} - \beta^b d_{k,n}^b \ ,$$

where b represents the number of times of repetition, k represents a position of a point for the calculation on the inner wall of the tube, $\beta$ represents a length of a repetition step, n represents a time point, and d represents a search direction.

In addition, a method for calculating an inner wall temperature from an outer wall temperature of a tube of an eighth invention is characterized in that, in the method of claim 7, the length of a repetition step is associated with a sensitivity coefficient indicating a variation relation in temperature between evaluated points of the inner and outer walls, the sensitivity coefficient is obtained by a sensitivity equation, and a boundary condition of the sensitivity equation for the inner wall of the tube is as follows:

[Formula 3]

$$\frac{\partial T}{\partial T_{k,n}} = \ell(s,\tau) ,$$

as well as $\ell(s,\tau) = 1$ in a case where s=k and $\tau$=n, while $\ell(s,\tau) = 0$ in the other cases, and $\dfrac{\partial T}{\partial T_{k,n}}$ is the sensitivity coefficient.

EFFECT OF THE INVENTION

The present invention makes it possible to correctly obtain a time variation of an inner wall temperature of a tube through calculation from an outer wall temperature of the tube, and requires a relatively short calculation time. For these reasons, it is possible to relatively favorably solve the problem in that an inner wall temperature of a tube is difficult to measure, in relation to a heat flow in the tube in the industrial production and the scientific research. Therefore, the present invention has a wide range of possible applications.

BRIEF DESCRIPTION OF THE DRAWINGS

[Fig. 1] Fig. 1 is a sketch of a problem of a two-dimensional, bilaterally symmetric, heat flow in a tube, in an embodiment of the present invention.
[Fig. 2] Fig. 2 is a position view of five measurement points on an outer wall respectively at 0°, 60°, 90°, 120°, and 180° in the embodiment of the present invention.
[Fig. 3] Fig. 3 is a position view of five measurement points on an inner wall respectively at 0°, 60°, 90°, 120°, and 180° in the embodiment of the present invention.
[Fig. 4] Fig. 4 shows experimentally obtained quasi-experimental values of inner-wall temperature at the five measurement points on the inner wall respectively at 0°, 60°, 90°, 120°, and 180°, in the embodiment of the present invention (a relation of change over time of the temperature).
[Fig. 5] Fig. 5 shows experimentally obtained quasi-experimental values of outer-wall temperature at the five measurement points on the outer wall respectively at 0°, 60°, 90°, 120°, and 180°, in the embodiment of the present invention (a relation of change over time of the temperature).
[Fig. 6] Fig. 6 is a sketch of a meshing in the embodiment of the present invention.
[Fig. 7] Fig. 7 is a comparison of calculated values of an inner wall temperature at 0° on the inner wall (a relation of change over time of the temperature) with the quasi-experimental values of the temperature at 0° on the inner wall (a relation of change over time of the temperature) in the embodiment of the present invention.
[Fig. 8] Fig. 8 is an enlarged graph from 60 seconds to 80 seconds in Fig. 7.
[Fig. 9] Fig. 9 shows a comparison of calculated values of the inner wall temperature at 60° on the inner wall (a relation of change over time of the temperature) with quasi-experimental values of the temperature at 60° on the inner wall (a relation of change over time of the temperature) in the embodiment of the present invention.
[Fig. 10] Fig. 10 shows a comparison of calculated values of the inner wall temperature at 120° on the inner wall (a relation of change over time of the temperature) with quasi-experimental values of the inner-wall temperature at 120° on the inner wall (a relation of change over time of the temperature) in the embodiment of the present invention.

MODE FOR CARRYING OUT THE INVENTION

A method for calculating an inner wall temperature of a tube according to the present invention will be described as follows on the basis of the accompanying drawings and an embodiment.

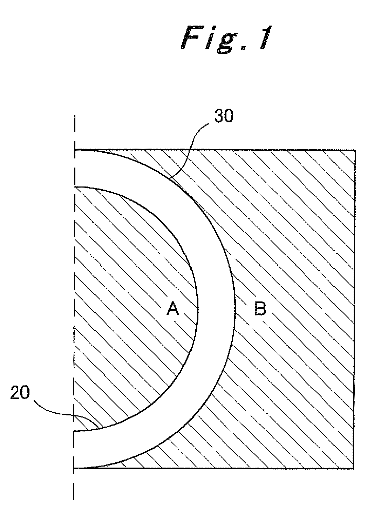

Fig. 1 shows a problem of a two-dimensional, bilaterally symmetric, heat flow in tube, where 20 denotes an inner wall of a tube, 30 an outer wall of the tube, A a fluid inside the tube, and B a fluid outside the tube.
With known tube dimensions, the temperature of the fluid outside the tube is represented by $T_{sir}$ and the convective heat transfer coefficient outside the tube is represented by $h_{out}$.
The time variation of the outer wall temperature of the tube can be calculated by a two-dimensional unsteady heat conduction equation with polar coordinates for a set of temperature values T* = T* (r, $\phi$, t) of the inner wall of the tube. Here, the two-dimensional unsteady heat conduction equation with polar coordinates is expressed as follows:

[Formula 4]

$$\frac{\partial T}{\partial t} = \alpha \left( \frac{1}{r} \frac{\partial}{\partial r} \left( r \frac{\partial T}{\partial r} \right) + \frac{1}{r^2} \frac{\partial^2 T}{\partial \phi^2} \right), \tag{1}$$

where, t represents time, as well as r and $\phi$ represent the coordinates of a node in the polar coordinate system.
The calculation of an outer side temperature of the tube is a calculation under the third boundary condition, and so, is given a convective heat transfer coefficient and an environmental temperature.

[Formula 5]

$$-\lambda \left( \frac{\partial T}{\partial n} \right)_w = h_{out} \left( T - T_{sir} \right). \tag{2}$$

The calculation of an inner side temperature of the tube is conducted under the first boundary condition, and so is given a value of the temperature at a point of interest.

[Formula 6]

$$T = T^*. \tag{3}$$

As the inner wall temperature of the tube, an accurate approximate value is found by an iterative calculation through an inverse heat conduction problem method based on a conjugate gradient method under a repeated initial condition.
The repeated initial condition is as follows:

[Formula 7]

$$T(r, \phi, 0) = T_0. \tag{4}$$

The objective function of the conjugate gradient method is as follows:

[Formula 8]

$$J = \frac{1}{2} \sum_{m=1}^{M} \sum_{n=1}^{N} [T_{Cal,m,n} - T_{Exp,m,n}]^2, \tag{5}$$

where $T_{cal,m,n}$ represents a calculated value of the outer wall temperature of the tube, $T_{Exp,m,n}$ represents an experimental value of the outer wall temperature of the tube, as well as M and N represents the number of measurement points and the number of time points, respectively. The iterative calculation formula for the inner wall temperature of the tube is as follows:

[Formula 9]

$$T^{b+1}_{k,n} = T^{b}_{k,n} - \beta^{b} d^{b}_{k,n} , \qquad (6)$$

where superscript b represents the number of times of repetition, subscript k represents a position of a point for the calculation on the inner wall of the tube, and subscript n represents a time point. Variable d represents a search direction, of which the calculation formula is as follows:

[Formula 10]

$$d^{b}{}_{k,n} = (\frac{\partial J}{\partial T_{k,n}})^{b} + \gamma^{b} d^{b-1}{}_{k,n} \qquad (7)$$

where $\gamma$ is calculated by the following formula:

[Formula 11]

$$\gamma^{b} = \frac{\sum_{k=1}^{K} \sum_{n=1}^{N} [(\frac{\partial J}{\partial T_{k,n}})^{b}]}{\sum_{k=1}^{K} \sum_{n=1}^{N} [(\frac{\partial J}{\partial T_{k,n}})^{b-1}]^{2}} \qquad (8)$$

The length $\beta$ of the repetition step is as follows:

[Formula 12]

$$\beta^{b} = \frac{\sum_{j=1}^{M} \sum_{i=1}^{N} (T_{i,j,cal} - T_{i,j,mea}) \sum_{k=1}^{K} \sum_{n=1}^{N} (\frac{\partial T_{i,j}}{\partial T_{k,n}})^{b} d_{k,n}{}^{b}}{\sum_{j=1}^{M} \sum_{i=1}^{N} [\sum_{k=1}^{K} \sum_{n=1}^{N} (\frac{\partial T_{i,j}}{\partial T_{k,n}})^{b} d_{k,n}{}^{b}]^{2}} , \qquad (9)$$

where $\partial T_{i,j}/\partial T_{k,n}$ represents a sensitivity coefficient indicating a temperature variation relation between evaluated points of the inner and outer walls, and it is necessary to find a solution of a sensitivity equation to obtain the sensitivity coefficient. The sensitivity equation is obtained by differentiating $T_{k,n}$ by an unsteady heat conduction equation:

[Formula 13]

$$\frac{\partial}{\partial t} (\frac{\partial T}{\partial T_{k,n}}) = \alpha [\frac{\partial^{2}}{\partial x^{2}} (\frac{\partial T}{\partial T_{k,n}}) + \frac{\partial^{2}}{\partial y^{2}} (\frac{\partial T}{\partial T_{k,n}})] . \qquad (10)$$

The boundary condition and the initial condition for the sensitivity equation are as follows:

Outer Side of Tube,

[Formula 14]

$$-\lambda\frac{\partial T}{\partial n}(\frac{\partial T}{\partial T_{k,n}})_w = h_{out}\left(\frac{\partial T}{\partial T_{k,n}}\right); \text{ and} \qquad (11)$$

Inner Side of Tube,

[Formula 15]

$$\frac{\partial T}{\partial T_{k,n}} = \ell(s,t) \quad . \qquad (12)$$

The value of the function 1 (s,t) is calculated by employing the following rule:

[Formula 16]

$$\ell(s,t) = 1 \text{ in a case where s=k and t=n, while}$$

$$\ell(s,t) = 0 \text{ in the other cases.} \qquad (13)$$

The initial condition is as follows:

[Formula 17]

$$\frac{\partial T(x,y,0)}{T_{k,n}} = 0 \quad . \qquad (14)$$

Calculating $\gamma$ requires the finding of a value $\partial J/\partial T_{k,n}$, of which the calculation formula is as follows:

[Formula 18]

$$\frac{\partial J}{\partial T_{k,n}} = \sum_{j=1}^{M}\sum_{i=1}^{N}(T_{i,j,cal} - T_{i,j,mea})\frac{\partial T_{i,j}}{\partial T_{k,n}} \quad . \qquad (15)$$

The convergence target of the conjugate gradient method is as follows:

[Formula 19]

$$J(T_{k,n}^{b}) < \varepsilon , \qquad (16)$$

where $\varepsilon$ is a positive number approaching zero.
To be specific, the steps for finding the solution of the conjugate gradient method are as follows.

Step S01: A solution of the sensitivity equation is found from the initial temperature $T^0$ to obtain the sensitivity coefficient $\partial T_{i,j}/\partial T_{k,n}$.

Step S02: A solution of the heat conduction equation (1) is found to obtain a calculated value of the outer wall temperature of the tube.

Step S03: It is examined whether or not the convergence target can be reached by the formula (16) on the basis of the calculated value and the measured value of the outer wall temperature of the tube. When the convergence target is reached, the repeating is terminated. When is not, the processing proceeds to Step 4.

Step S04: Repetition parameters d, $\gamma$, $\beta$, and $\partial J/\partial T_{k,n}$ are obtained by calculation of the formulae (7), (8), (9), and (15).

Step S05: The inner wall temperature of the tube $T^{b+1}$ for the next repetition steps is calculated by the formula (6), and the processing returns to Step S02.

A specific example of the present invention will be described below.

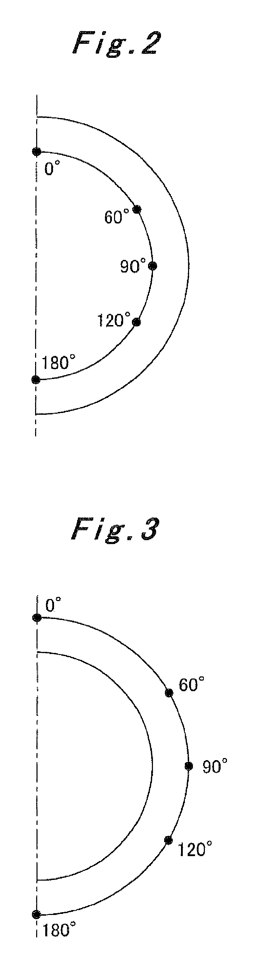

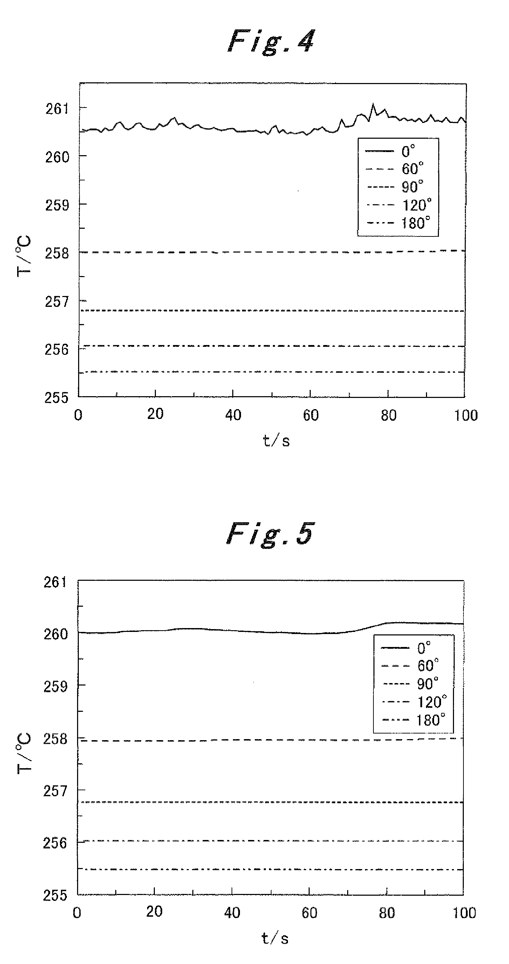

Fig. 1 shows a sketch of a problem of a two-dimensional, bilaterally symmetric, heat flow in tube. From this, quasi-experimental values of temperatures at evaluated points on the inner wall of the tube and quasi-experimental values of temperatures at evaluated points on the outer wall of the tube can be obtained first through experimental measurement, in order to calculate the inner wall temperature of the tube from the outer wall temperature of the tube in accordance with the technical idea of the present invention and to verify the operational effect of the conjugate gradient method in the technical idea of the present invention. In this example, five measurement points at 0°, 60°, 90°, 120°, and 180° for the temperature of the outer wall were selected, while only a half of the circumference was necessary to be taken into consideration because the flow is bilaterally-symmetrical. The positions of evaluated points for the temperature of the inner wall were selected as shown in Fig. 2, while the positions of the measurement points for the temperature of the outer wall were as shown in Fig. 3. The respective variations with time of the temperatures of the inner wall and the outer wall of the tube obtained from the two sets of quasi-experimental values were as shown in Fig. 4 and Fig. 5, respectively. A set of initial values of the inner wall temperature of the tube are obtained on the basis of experience in measurement by experiments so far while calculated values of the inner wall temperature of the tube are obtained by calculation utilizing the method of the present invention. Further, comparison between the quasi-experimental value of the inner wall temperature of the tube and the calculated value of the inner wall temperature of the tube reveals what degree these values match each other. As a result, the verification of the technical idea of the present invention is achieved. In the above-described procedures, both of the calculation processes of the method for solving the forward heat conduction problem and the method for solving the inverse heat conduction problem can be conducted by utilizing a FORTRAN program or any other implementable method.

In this example, the two-dimensional tube to be measured has a tube outer diameter of 60.5 mm and a tube inner diameter of 43.1 mm. Since the aforementioned problem of a two-dimensional, bilaterally symmetric, heat flow in tube is bilaterally symmetrical, only a half of the circumference is necessary to be taken into consideration.

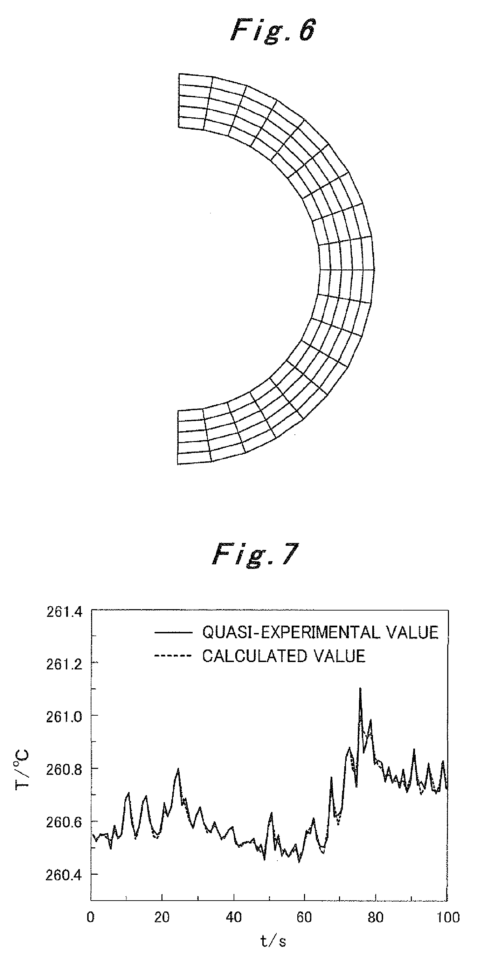

In this example, the finite element method (FEM) was employed to perform calculation on the half of the tube. In a case where the FEM is employed to perform calculation, meshing needs to be performed on a region for the calculation. Rectangular elements were employed for the meshing in this example. Here, 19 element nodes were set in the circumferential direction, while six element nodes were set in the radial direction. Thus, a total of $19 \times 6 = 114$ nodes were present on the semi-circumference as shown in Fig. 6.

First of all, variations with time of temperatures at the above-described 114 nodes were obtained by calculation according to the iterative method. Among them, the temperatures at the 19 nodes on the inner wall were obtained by calculation according to the conjugate gradient method while the temperatures at the other nodes, that is, 114-19=95 nodes are obtained by the heat conduction equations (the formulae (1), (2), and (3)). Thereafter, an objective function value was obtained by the formula (5) on the basis of the calculated values and the experimental measured values of the nodes on the outer wall. In this way, it was judged whether or not the convergence target is reached.

Although only five experimental measurement points were set on the outer wall in this example, the number of nodes on the outer wall obtained by the meshing is 19. The five experimental measurement points overlap respectively with five nodes out of those obtained by the meshing. The values of the rest of the nodes, that is, 19-5=14 nodes can be obtained by performing linear interpolation from those of the experimental measurement points. The temperature values obtained by the interpolation can be regarded as the quasi-experimental values.

It should be explained here that the element nodes obtained by the meshing may not overlap with the experimental measurement points, that is, all the temperature values of the element nodes may be obtained by the interpolation. However, the interpolation leads to an error. In this respect, the meshing method associated with the overlapping of the element nodes and the experimental points is capable of reducing the error. For this reason, the method in which the element nodes and the experimental points are caused to overlap with each other should be employed if possible.

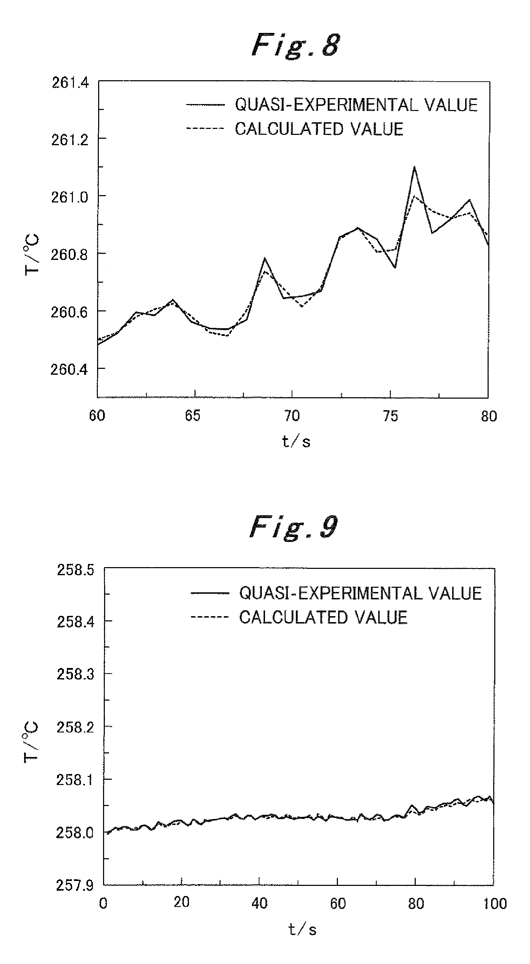

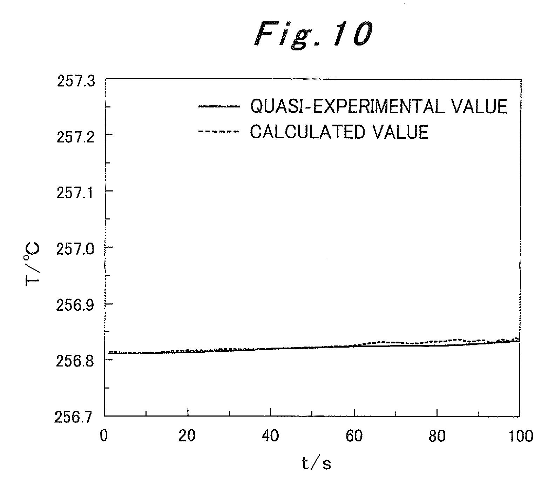

Among them, the calculation of the outer wall temperature of the tube was executed under the third boundary condition, where a known environmental fluid temperature on the outer wall of the tube is $T_{sir}$ = 20°C, the convective heat transfer coefficient is $h_{out}$ = 1 w/ (m•k), the thermal diffusivity of the tube is $\alpha$ = 4.46 $\times$ 10$^{-6}$m$^2$/s, and the coefficient of thermal conductivity is $\lambda$ = 19.35 w/(m·k). The calculated value of the inner wall temperature of the tube was obtained from an initial set value of the inner wall temperature of the tube by iteration of the inverse heat conduction problem implemented by a program. In this example, the set convergence target value was $\varepsilon = 0.05$, and the iteration was performed a total of 1160 times to reach the convergence target value, which took approximately 12 hours by using a personal computer incorporating Pentium IV (Registered Trademark) 1.8G, CPU/1G. Fig. 7 shows a comparison of the calculated values of the inner wall temperature of the tube obtained on the node at the position of 0° by utilizing the method of the present invention with the quasi-experimental values. The graph shows that the coincidence of the calculated values obtained by the conjugate gradient method with the quasi-experimental values is relatively favorable. Fig. 8 is an enlarged graph of data in a range from the point of 60 seconds to the point of 80 seconds in Fig. 7. As shown in the graph, the conjugate gradient method is not only capable of accurately capturing even a relatively small variation of the values of the inner wall temperature of the tube, but also capable of accurately capturing a relatively large variation thereof between the point of 60 seconds and the point of 80 seconds. The comparison of the calculated values at some other nodes with the quasi-experimental values revealed that the conjugate gradient method was capable of accurately capturing temperature variations at the other positions, and that the coincidence of the calculated values with the quasi-experimental values was also relatively favorable. Fig. 9 and Fig. 10 show the comparisons of the calculated values obtained on the inner wall of the tube on the nodes at the position of 60° and 20° by the conjugate gradient method with the quasi-experimental values. As shown in these graphs, the coincidence of the calculated values obtained by the method of the present invention with the quasi-experimental values is relatively favorable.

According to the above-described calculations and the comparison results, the present invention is capable of accurately calculating a time variation of the inner wall temperature of a tube from the outer wall temperature of the tube, requires a relatively short calculation time, and makes it possible to relatively favorably solve the problem in that the inner wall temperature of a tube is difficult to measure, in relation to thermal flow in the tube in the industrial production and the scientific research. Therefore, the present invention has a wide range of possible applications.

The above-described embodiment is only for explanation of the present invention, and is not intended to limit the present invention. Those skilled in the art can make various changes and modifications without departing from the gist and the scope of application of the present invention. For this reason, any equivalent technical ideas also belong to the scope of the present invention, and the range of patent protection of the present invention should be limited by the scope of claims.

INDUSTRIAL APPLICABILITY

The present invention relates to a method for calculating an inner wall temperature from an outer wall temperature of a tube. Since the present invention is applicable to a problem in which an inner wall temperature of a tube is difficult to measure in relation to flow in tube in the industrial production and the scientific research, the present invention has a wide range of possible applications.

EXPLANATION OF THE REFERENCE NUMERALS

20    INNER WALL OF TUBE
30    OUTER WALL OF TUBE
A    FLUID INSIDE TUBE
B    FLUID OUTSIDE TUBE

**Claims**

1.  A method for calculating an inner wall temperature from an outer wall temperature of a tube, **characterized in that** the method comprises the steps of:

    obtaining outer-wall-temperature measured values respectively at a plurality of points under a two-dimensional unsteady flow in the tube; and
    obtaining inner-wall-temperature resultant values at a plurality of points on a basis of the outer-wall-temperature measured values.

2.  The method according to claim 1, **characterized in that** the step of obtaining inner-wall-temperature resultant values at a plurality of points on a basis of the outer-wall-temperature measured values at a plurality of points includes the steps of:

setting an inner-wall-temperature initial value;

obtaining outer-wall-temperature calculated values at the plurality of points through calculation on a basis of the inner-wall-temperature initial value; and

judging whether or not each of the outer-wall-temperature calculated values and a corresponding one of the outer-wall-temperature measured values coincide with each other, and setting the inner-wall-temperature initial value as the inner-wall-temperature resultant value when the values coincide with each other while obtaining the resultant value by repeating calculation when the values do not coincide with each other.

3. The method according to claim 1, **characterized in that** the plurality of points on the outer wall and the inner wall for evaluation are obtained by a meshing method.

4. The method according to claim 2, **characterized in that** the outer-wall-temperature calculated values at the plurality of points are obtained by finding a solution of a two-dimensional unsteady heat conduction equation for the tube.

5. The method according to claim 2, **characterized in that**, the step of judging whether or not each of the outer-wall-temperature calculated values and a corresponding one of the outer-wall-temperature measured values coincide with each other includes the steps of:

obtaining a present objective function value on a basis of each of the outer-wall-temperature calculated values and a corresponding one of the outer-wall-temperature measured values; and

judging whether or not the present objective function value is smaller than a predetermined threshold value, and judging that the values coincide with each other when the present objective function value is smaller than the predetermined threshold value, but judging that the values do not coincide with each other when the present objective function value is not smaller than the predetermined threshold value.

6. The method according to claim 5, **characterized in that**
the objective function is

[Formula 20]

$$J = \frac{1}{2} \sum_{m=1}^{M} \sum_{n=1}^{N} [T_{Cal,m,n} - T_{Exp,m,n}]^2 ,$$

where $T_{cal,m,n}$ represents the outer-wall-temperature calculated value, $T_{Exp,m,n}$ represents the outer-wall-temperature measured value, and M and N represent the number of measurement points and the number of time points, respectively.

7. The method according to claim 2, **characterized in that** the method further comprises a step of obtaining the inner-wall-temperature initial value for a next stage of repetition by an iterative equation before the step of obtaining a resultant value by repeating calculation, and
the iterative equation is

[Formula 21]

$$T_{k,n}^{b+1} = T_{k,n}^{b} - \beta^b d_{k,n}^b ,$$

where b represents the number of times of repetition, k represents a position of a point for the calculation on the inner wall of the tube, $\beta$ represents a length of a repetition step, n represents a time point, and d represents a search direction.

8. The method according to claim 7, **characterized in that** the length of a repetition step is associated with a sensitivity coefficient indicating a variation relation in temperature between evaluated points of the inner and outer walls, the sensitivity coefficient is obtained by a sensitivity equation, and

a boundary condition of the sensitivity equation for the inner wall of the tube is as follows:

[Formula 22]

$$\frac{\partial T}{\partial T_{k,n}} = \ell(s, \tau),$$

as well as $\ell(s,\tau) = 1$ in a case where s=k and $\tau$ = n, while $\ell(s, \tau) = 0$ in the other cases, and $\dfrac{\partial T}{\partial T_{k,n}}$ is the sensitivity coefficient.

[Formula 22]

*Fig.1*

## Fig.2

## Fig.3

## *Fig.4*

## *Fig.5*

*Fig.6*

*Fig.7*

## Fig.8

## Fig.9

## *Fig.10*

**EP 2 381 231 A1**

| | | |
|---|---|---|
| **INTERNATIONAL SEARCH REPORT** | International application No. | |
| | PCT/JP2009/066945 | |

A. CLASSIFICATION OF SUBJECT MATTER
*G01K7/00*(2006.01)i, *G01K3/14*(2006.01)i

According to International Patent Classification (IPC) or to both national classification and IPC

B. FIELDS SEARCHED

Minimum documentation searched (classification system followed by classification symbols)
G01K7/00, G01K3/14, G01N25/18

Documentation searched other than minimum documentation to the extent that such documents are included in the fields searched
Jitsuyo Shinan Koho        1922–1996    Jitsuyo Shinan Toroku Koho    1996–2009
Kokai Jitsuyo Shinan Koho  1971–2009    Toroku Jitsuyo Shinan Koho    1994–2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2007-71686 A (Nippon Steel Corp.),<br>22 March 2007 (22.03.2007),<br>paragraphs [0019] to [0053]; fig. 1-A, 1-B, 2<br>(Family: none) | 1<br>2-4<br>5-8 |
| X<br>Y<br>A | JP 10-206243 A (Mitsubishi Heavy Industries, Ltd.),<br>07 August 1998 (07.08.1998),<br>paragraphs [0020] to [0026]; fig. 1, 2<br>(Family: none) | 1<br>2-4<br>5-8 |
| Y | JP 59-16051 A (Hitachi, Ltd.),<br>27 January 1984 (27.01.1984),<br>page 1, lower right column, lines 2 to 17<br>(Family: none) | 2-4 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>15 December, 2009 (15.12.09) | Date of mailing of the international search report<br>28 December, 2009 (28.12.09) |
|---|---|
| Name and mailing address of the ISA/<br>Japanese Patent Office | Authorized officer |
| Facsimile No. | Telephone No. |

Form PCT/ISA/210 (second sheet) (April 2007)

18

**INTERNATIONAL SEARCH REPORT**

International application No.

PCT/JP2009/066945

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-134383 A (Nippon Steel Corp.), 26 May 2005 (26.05.2005), entire text; all drawings (Family: none) | 1-8 |
| A | JP 2002-131258 A (Japan Science and Technology Corp.), 09 May 2002 (09.05.2002), entire text; all drawings (Family: none) | 1-8 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004251843 A